# EUROPEAN PATENT APPLICATION

(11) **EP 1 731 875 A1**
(43) Date of publication of application: **13.12.2006**
(21) Application number: 05710488.7
(22) Date of filing: 22.02.2005
(51) Int. Cl.: G01C 21/36, G08G 1/0969, G09B 29/00

(54) **NAVIGATION SYSTEM**

(30) Priority: 02.04.2004 JP 2004110155
(71) Applicant: MATSUSHITA ELECTRIC INDUSTRIAL CO., LTD., Osaka 571-8501 (JP)
(72) Inventor: OKUSA, Yusuke, c/o Matsushita Electric Ind. Co Ltd, Osaka-shi, Osaka 540-6319 (JP)
(74) Representative: Pautex Schneider, Nicole Véronique
(86) International application number: PCT/JP2005/002757
(87) International publication number: WO 2005/098363

(57) **Abstract**

It is an object of the present invention to provide a navigation system which can allow an automotive vehicle to travel along an optimum traffic lane of a roundabout **20** in an efficient manner, and inform about an optimum outlet of the roundabout **20** on the basis of an optimum travel route to the destination. When the judgment is made that there is a roundabout **20** on the way to the destination on the basis of the optimum travel route calculated by the optimum travel route calculating section **11,** the navigation system is adapted to detect a direction of an optimum outlet of the roundabout **20,** to detect the number of traffic lanes of the roundabout **20,** and to inform the driver about an optimum traffic lane in the roundabout **20.**

## Description

### TECHNICAL FIELD OF THE INVENTION

The present invention relates to a navigation system, and more particularly to a navigation system to be mounted on a moving object such as for example an automotive vehicle, the navigation system having a special function of guiding a driver to an optimum outlet of a roundabout.

### DESCRIPTION OF THE RELATED ART

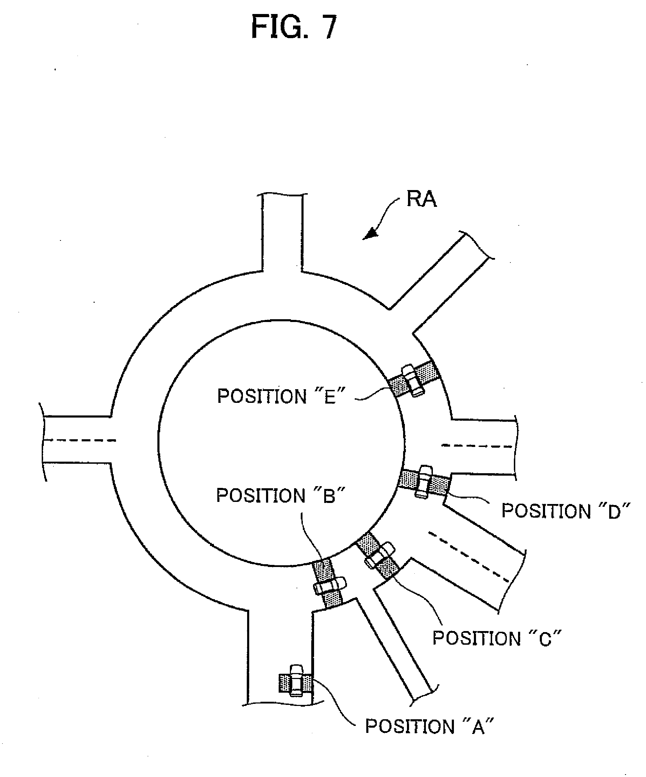

As one of conventional navigation systems of this type, there has been known a navigation system disclosed in a patent document 1.
When the conventional navigation system guides a driver to a selected outlet of a roundabout **"RA"** in FIG. 7, the conventional navigation system is adapted to judge whether or not an automotive vehicle reaches a position **"A".** When the automotive vehicle reaches the position **"A",** the conventional navigation system is adapted to obtain the number of outlets which are on the route from the position **"A"** to an outlet selected on the basis of map information, to input the number of the outlets in a counter, to decrement the number inputted in the counter when the automotive vehicle passes by each outlet on the way to a position **"E"** from a position **"B",** and to guide the driver to the selected outlet of a roundabout **"RA"** and the direction of the selected outlet on the basis of the decremented number.

The conventional navigation system disclosed in the patent document 1 can allow the driver to concentrate on driving, and guide the driver to the selected outlet of the roundabout at a relatively high accuracy in an easily comprehensible manner without allowing the driver to count the number of outlets which are on the route from the position "**A**" to the selected outlet of the roundabout.
Patent document **1**: Jpn. unexamined patent publication No. 2002-228475

### DISCLOSURE OF THE INVENTION

### PROBLEMS TO BE SOLVED BY THE INVENTION

The conventional navigation system disclosed in the patent document 1, however, encounters such a problem that, when the automotive vehicle enters a roundabout having a relatively large diameter, and having two or more traffic lanes, the driver is not informed about the optimum traffic lane in the roundabout. As a result, the conventional navigation system imposes on the driver a task to judge whether or not the automotive vehicle is traveling along the optimum traffic lane, and tends to fail to guide the driver to the optimum outlet in the roundabout.

It is, therefore, an object of the present invention to provide a navigation system which can guide the driver to the optimum outlet in the roundabout to ensure that the automotive vehicle passes through the roundabout in an efficient manner on the way to the destination.

### MEANS FOR SOLVING THE PROBLEMS

The navigation system according to the present invention comprises: map information obtaining means for obtaining map information; current position information obtaining means for obtaining information on a current position of a moving object; optimum travel route calculating means for calculating an optimum travel route to a destination on the basis of the current position of the automotive vehicle; direction judging means for judging whether or not there is a roundabout on the way to the destination on the basis of the optimum travel route, and detecting a direction of an optimum outlet of the roundabout when the judgment is made that there is a roundabout on the way to the destination; number-of-traffic-lane-of-roundabout judging means for detecting the number of traffic lanes of the roundabout; and informing means for informing about an optimum traffic lane to ensure that the moving object travels along the optimum traffic lane to the optimum outlet from an entry road of the roundabout.

The navigation system thus constructed according to the present invention can allow the moving object to travel along an optimum traffic lane of a roundabout in an efficient manner, and inform about an optimum outlet of the roundabout on the basis of an optimum travel route to the destination by reason that the informing means is adapted to inform about an optimum traffic lane to ensure that the moving object travels along the optimum traffic lane to the optimum outlet from an entry road of the roundabout.

The navigation system further comprises number-of-traffic-lane-of-entry-road judging means for detecting the number of traffic lanes of an entry road of the roundabout. The informing means is adapted to inform about the optimum traffic lane on the basis of the number of the traffic lanes of the entry road.

The navigation system thus constructed according to the present invention can allow the moving object to travel along an optimum traffic lane of a roundabout in an efficient manner, and inform about an optimum outlet of the roundabout on the basis of an optimum travel route to the destination by reason that the informing means is adapted to inform about the optimum traffic lane on the basis of the number of the traffic lanes of the entry road.

The navigation system further comprises traffic signal judging means for judging whether or not there is a traffic signal on the entry road to the roundabout. The informing means is adapted to inform about the optimum traffic lane on the basis of the judgment made by the traffic signal detecting means.

The navigation system thus constructed according to the present invention can allow the moving object to travel along an optimum traffic lane of a roundabout in an efficient manner, and inform about an optimum outlet of the roundabout on the basis of an optimum travel route to the destination by reason that the informing means is adapted to inform about the optimum traffic lane on the basis of the judgment made by the traffic signal detecting means.

### ADVANTAGEOUS EFFECT OF THE INVENTION

From the foregoing description, it will be understood that the navigation system according to the present invention can allow the moving object to travel along an optimum traffic lane of a roundabout in an efficient manner, and inform about an optimum outlet of the roundabout on the basis of an optimum travel route to the destination.

### BRIEF DESCRIPTION OF THE DRAWINGS

[FIG. 1] FIG. **1** is a block diagram showing the navigation system according to an embodiment of the present invention.
[FIG. 2] FIG. **2** is a flow chart showing the operation to be performed by the navigation system according to the embodiment of the present invention.
[FIG. 3] FIG. **3** is a view showing the optimum traffic lane to be calculated on the basis of the number of the traffic lanes of the roundabout in the navigation system according to the embodiment of the present invention.
[FIG. 4] FIG. **4** is views for explaining the optimum traffic lane to be calculated on the basis of the number of the traffic lanes of the roundabout in the navigation system according to the embodiment of the present invention.
[FIG. 5] FIG. **5** is views for explaining the optimum traffic lane to be calculated on the basis of the number of the traffic lanes of the entry road to the roundabout by the navigation system according to the embodiment of the present invention.
[FIG. 6] FIG. **6** is views for explaining the optimum traffic lane to be calculated in this embodiment when there is a traffic signal on an entry road to the roundabout.
[FIG. 7] FIG. **7** is a view for explaining a conventional navigation method of allowing the user to drive through a roundabout.

### EXPLANATION OF THE REFERENCE NUMERALS

**2 :** GPS receiver (current position information obtaining means)
**3 :** autonomous navigation sensor (current position information obtaining means)
**6 :** map information storage section (map information storage means)
**11:** optimum travel route calculating section (optimum travel route calculating means)
**12:** outlet number judging section (direction judging means)
**13:** number-of-traffic-lane-of-roundabout judging section (number-of-traffic-lane-of-roundabout judging means)
**14:** number-of-traffic-lane-of-entry-road judging section (number-of-traffic-lane-of-entry-road judging means)
**15:** traffic signal judging section (traffic signal judging means)
**16:** guide information informing section (informing means)

### DETAILED DESCRIPTION OF THE PREFERRED EMBODIMENT

The navigation system according to the embodiment of the present invention will be described hereinafter with reference to the accompanying drawings.

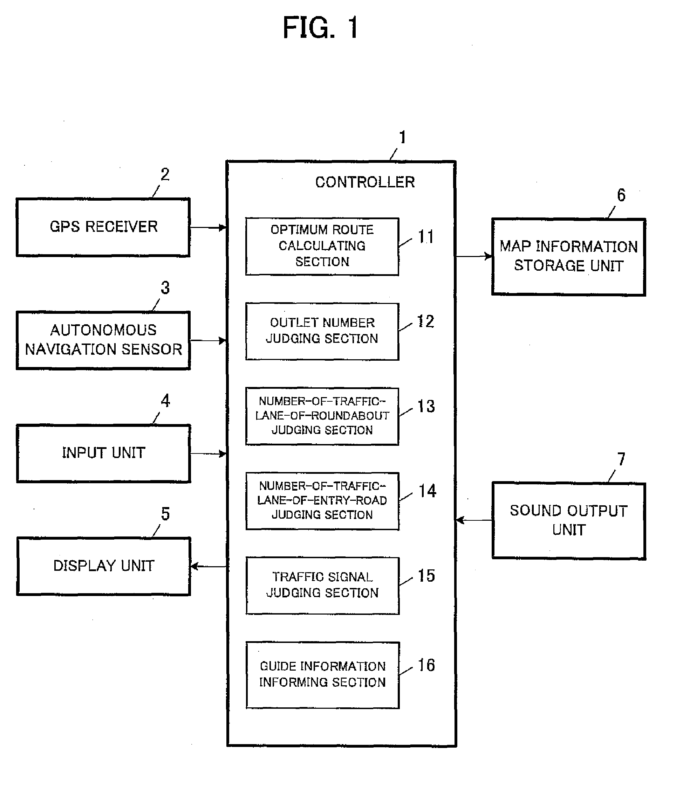

FIGS. **1** to **6** are views for explaining the navigation system according to the embodiment of the present invention. The following description will be directed to a vehicle navigation apparatus to be mounted on an automotive vehicle (moving object) as the navigation system according to the embodiment of the present invention.

The constitution of the navigation system according to the embodiment of the present invention will be firstly described with reference to FIG. **1.** As shown in FIG. **1,** the vehicle navigation apparatus comprises a controller **1,** a GPS receiver **2,** an autonomous navigation sensor **3,** an input section **4,** a display section **5,** a map information storage section **6,** and a sound output section **7.**

The controller **1** has a central processing section (CPU), a random access memory (RAM), a read only memory (ROM) and the like. The controller **1** is adapted to control each part of the vehicle navigation apparatus. The GPS receiver **2** is adapted to receive electric waves from GPS satellites, to produce current position information indicative of a current absolute position (latitude and longitude) of the automotive vehicle on the basis of the electric waves received from the GPS satellites, and to output the current position information to the controller **1.**

The autonomous navigation sensor **3** has a travel distance sensor, a direction sensor and the like. The autonomous navigation sensor **3** is adapted to detect a pulse signal outputted in response to a revolution speed of wheels of the automotive vehicle, and to produce information on a travel distance of the automotive vehicle on the basis of the detected pulse signal. The direction sensor is adapted to directly detect a travel direction of the automotive vehicle by using a gyroscope, while the angular velocity sensor is adapted to detect an angular velocity of the automotive vehicle. The autonomous navigation sensor **3** is adapted to calculate a difference between a current travel direction and a previous travel direction on the basis of the detected travel direction and angular velocity.

The autonomous navigation sensor **3** is adapted to produce position information indicative of a current relative position of the automotive vehicle in response to a direction signal and a velocity signal, and to output the position information to the controller **1.** In this embodiment, the GPS receiver **2** and the autonomous navigation sensor **3** collectively constitute current position information obtaining means.

The input section **4** includes a remote controller, a touch-sensitive panel and the like. The input section **4** is adapted to input a variety of instructions for operating the vehicle navigation apparatus. The display section **5** is constituted by a liquid crystal display panel or the like. The display section **5** is adapted to display a variety of information produced by the vehicle navigation apparatus.

The map information storage section **6** has map information about nationwide roads and local roads stored therein. Here, the map information storage section **6** may be constituted by a memory medium such as for example CD-ROM, DVD, and a memory card. The map information storage section **6** may be adapted to receive map information from a server by way of the Internet. The sound output section **7** is constituted by one or more loudspeakers, and adapted to output a sound indicative of the information produced by the vehicle navigation apparatus. In this embodiment, the map information storage section **6** constitutes map information storage means.

The controller **1** includes an optimum travel route calculating section **11,** an outlet number judging section **12,** a number-of-traffic-lane-of-roundabout judging section **13,** a number-of-traffic-lane-of-entry-road judging section **14,** a traffic signal judging section **15,** and a guide information informing section **16.**

The optimum travel route calculating section **11** is adapted to receive the map information from the map information storage section **6,** to superimpose a current position marker on a map to be displayed on a screen, the current position marker being indicative of a current position of the automotive vehicle, and to calculate an optimum travel route to a destination (inputted from the input section **4**) from the current position. In this embodiment, the optimum travel route calculating section **11** constitutes optimum travel route calculating means.

When the judgment is made that there is a roundabout on the way to the destination on the basis of the optimum travel route calculated by the optimum travel route calculating section **11,** the outlet number judging section **12** is adapted to detect a direction of an optimum outlet of the roundabout and an outlet number corresponding to the optimum outlet. In this embodiment, the outlet number judging section **12** constitutes direction judging means.

The number-of-traffic-lane-of-roundabout judging section **13** is adapted to detect the number of traffic lanes of the roundabout on the basis of the map information received from the map information storage section **6.** In this embodiment, the number-of-traffic-lane-of-roundabout judging section **13** constitutes number-of-traffic-lane-of-roundabout judging means.

The number-of-traffic-lane-of-entry-road detecting section **14** is adapted to detect the number of traffic lanes of an entry road on the basis of the map information received from the map information storage section **6.** The number-of-traffic-lane-of-entry-road judging section **14** constitutes number-of-traffic-lane-of-entry-road judging means.

The traffic signal judging section **15** is adapted to detect whether or not there is a traffic signal on the entry road to the roundabout on the basis of the map information obtained from the map information storage section **6** or a signal received from the traffic signal. The traffic signal judging section **15** constitutes traffic signal judging means.

The guide information informing section **16** is adapted to control the display section 5 and the sound output section **7** on the basis of the judgment made by the number-of-traffic-lane-of-roundabout judging section **13** to inform the driver about the optimal traffic lane of each of the entry road and the roundabout.

The guide information informing section **16** is adapted to control the display section **5** and the sound output section **7** on the basis of the number of the traffic lanes of the roundabout judged by the number-of-traffic-lane-of-roundabout judging section **13** and the number of the traffic lanes of the entry road judged by the number-of-traffic-lane-of-entry-road judging section **14** to inform the driver about the optimal traffic lane of each of the entry road and the roundabout.

The guide information informing section **16** is adapted to control the display section **5** and the sound output section **7** on the basis of at least one of the number of the traffic lanes of the roundabout judged by the number-of-traffic-lane-of-roundabout judging section **13** and the number of the traffic lanes of the entry road judged by the number-of-traffic-lane-of-entry-road judging section **14** to inform the driver about the optimal traffic lane of each of the entry road and the roundabout. In this embodiment, the guide information informing section **16** constitutes guide information informing means.

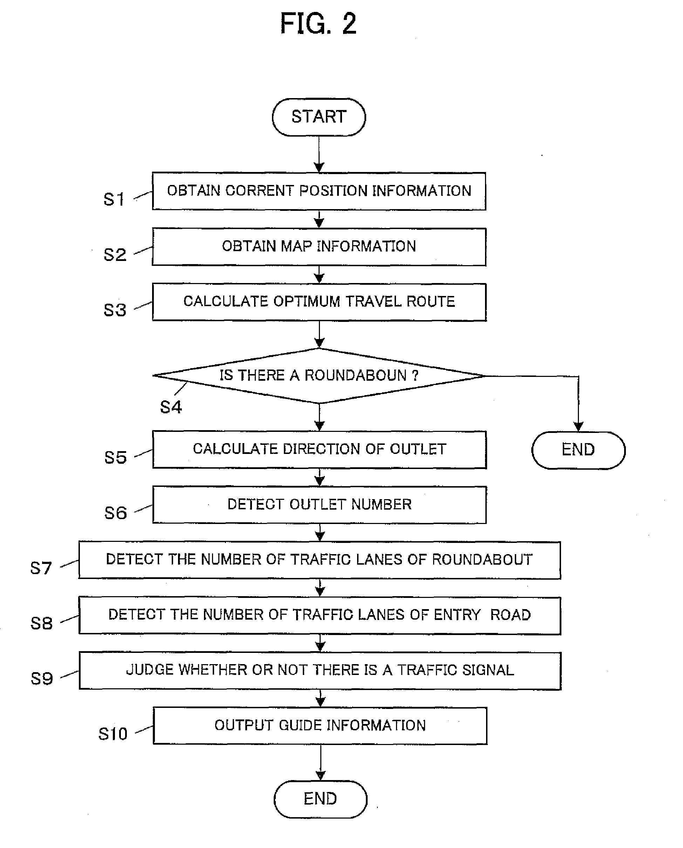

The navigation method of guiding the driver through an optimum traffic lane of the roundabout will be then described hereinafter with reference to the flow chart of FIG. **2,** the flow chart showing a program to be executed by the controller **1** as a special navigation program for guiding the driver through an optimum traffic lane of the roundabout.

As shown in FIG. **2,** the current position information is firstly obtained from the GPS receiver **2** and the autonomous navigation sensor **3** (in the step **S1).** The map information is then obtained from the map information storage section 6 (in the step **S2).**

The map information based on the current position of the automotive vehicle is then displayed with the marker indicative of the current position of the automotive vehicle by the display section **5.** The optimum travel route to the destination inputted from the input section **4** is calculated on the basis of the current position of the automotive vehicle by the optimum travel route calculating section 11 (in the step **S3**).

The judgment is then made (in the step **S4)** on whether or not there is one or more roundabouts on the way to the destination on the basis of the optimum travel route calculated by the optimum travel route calculating section **11.** When the judgment is made in the step **S4** that there is no roundabout on the way to the destination, the vehicle navigation apparatus executes a normal navigation program after stopping this special navigation program.

When, on the other hand, the judgment is made (in the step **S4**) that there is a roundabout on the way to the destination, the direction of the optimum outlet of the roundabout is calculated by the outlet number judging section **12** (in the step **S5**). The outlet number corresponding to the optimum outlet is then detected by the outlet number judging section **12** (in the step **S6).** The number of the traffic lanes of the roundabout is then detected by the number-of-traffic-lane-of-roundabout judging section **13** (in the step **S7).** The number of the traffic lanes of the entry road is then detected by the number-of traffic-lane-of-entry-road judging section **4** (in the step **S8).**

The judgment is then made by the traffic signal judging section **15** (in the step **S9**) on whether or not there is a traffic signal on the entry road to the roundabout. The guide information informing section **16** informs the driver about the optimum traffic lane of the roundabout on the basis of the judgment made by the traffic signal judging section **15** through the image displayed by the display section **5** and the sound outputted by the sound output section **7.**

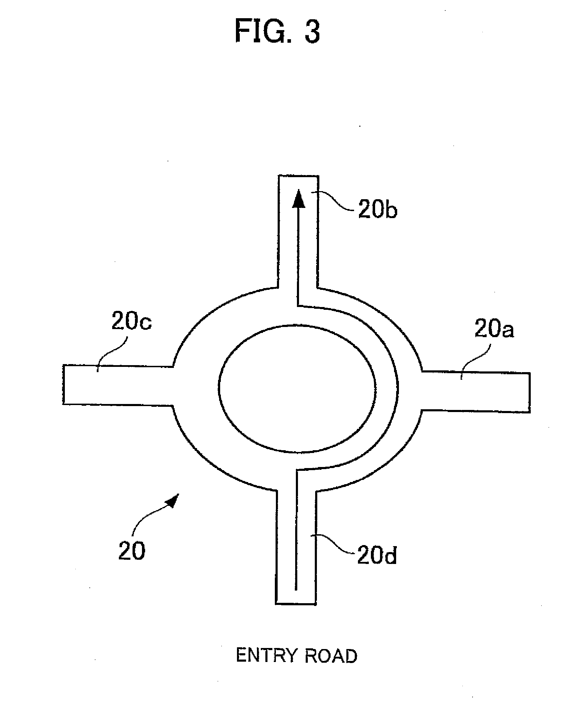

FIG. **3** is a view for explaining the optimum traffic lane calculated on the basis of the direction of the optimum outlet and the number of the traffic lanes of the roundabout **20.** When the judgment is made that the roundabout **20,** as shown in FIG. **3,** has only one traffic lane, the vehicle navigation apparatus does not inform the driver about the optimum traffic lane (such as inward and outward turning lanes) of the roundabout 20 even if the optimum outlet is on the right side **20a,** on the far side **20b,** or on the left side **20c** of the roundabout **20.**

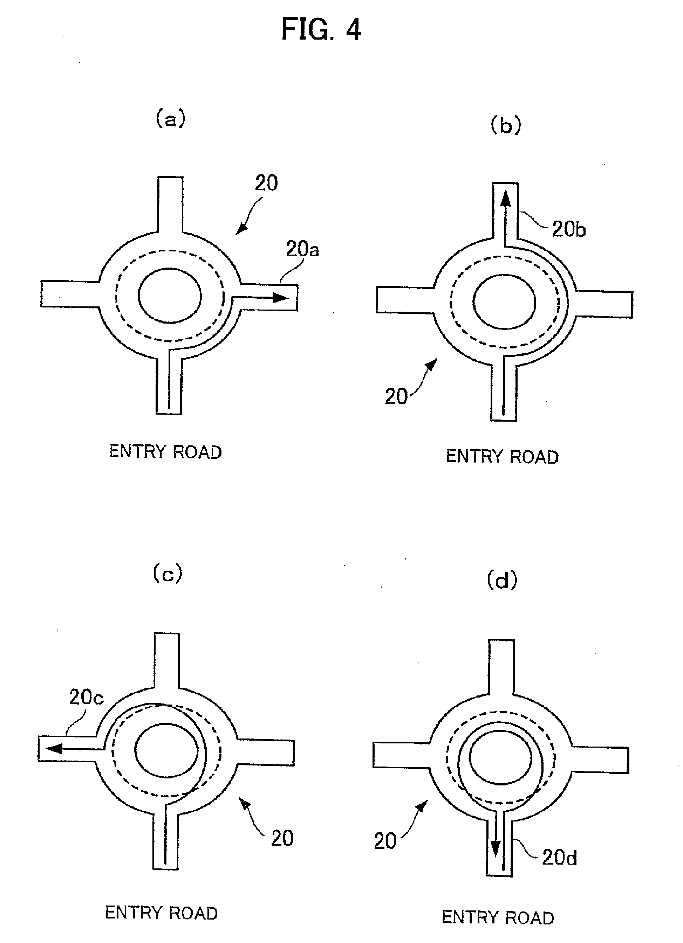

When the judgments are made that the roundabout **20** has two or more traffic lanes, and that the optimum outlet is on the right side **20a** of the roundabout **20** as shown in FIG. **4(a),** or on the far side **20b** of the roundabout **20** as shown in FIG. **4**(b), the vehicle navigation apparatus informs the driver about the optimum traffic lane to ensure that the automotive vehicle travels along the outward turning lane of the roundabout **20.** When, on the other hand, the judgments are made that the roundabout **20** has two or more traffic lanes, and that the optimum outlet is on the left side 20c of the roundabout 20 as shown in FIG. **4(c),** or on the near side **20d** of the roundabout **20** as shown in FIG. **4(d),** the vehicle navigation apparatus informs the driver about the optimum traffic lane to ensure that the automotive vehicle travels along the inward turning lane of the roundabout 20.

When the judgment is made that the entry road has only one traffic lane, the vehicle navigation apparatus does not inform the driver about the optimum traffic lane (such as inward and outward turning lanes) to be calculated on the basis of the number of the traffic lanes of the roundabout **20** even if the optimum outlet is on the right side **20a,** on the far side **20b,** on the left side **20c,** or on the near side **20d** of the roundabout **20.**

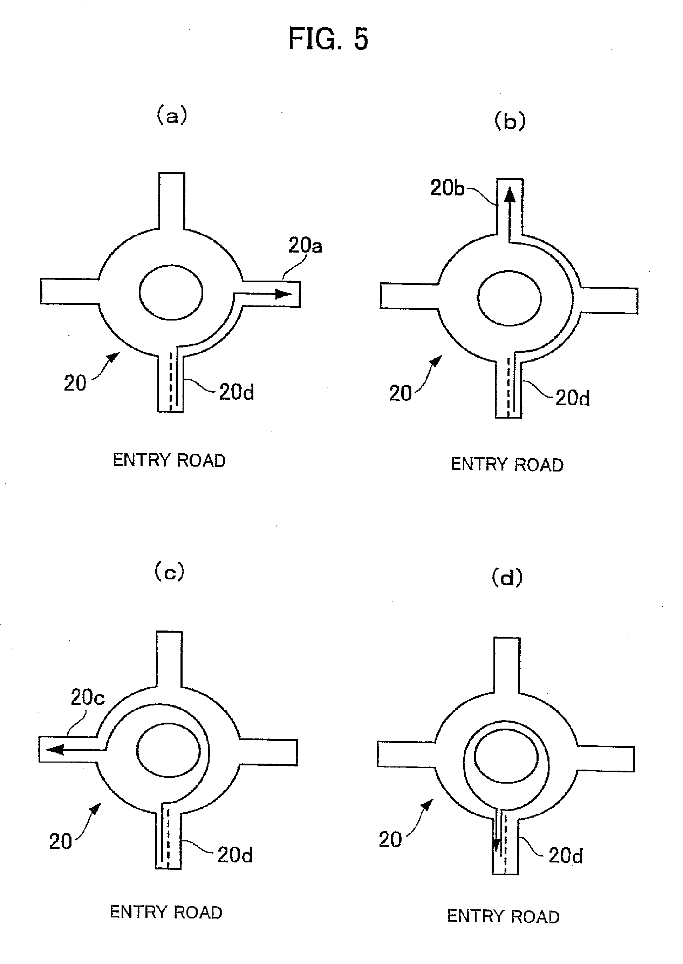

When the judgments are made that the entry road **20d** has two or more traffic lanes, and that the optimum outlet is on the right side 20a of the roundabout **20** as shown in FIG. **5(a),** or on the far side **20b** of the roundabout **20** as shown in FIG. **5(b),** the vehicle navigation apparatus informs the driver about the optimum traffic lane of the entry road 20d to ensure that the automotive vehicle travels along the right side lane of the entry road 20d and the outward turning lane of the roundabout **20.** When, on the other hand, the judgments are made that the entry road **20d** has two or more traffic lanes, and that the optimum outlet is on the left side 20c of the roundabout **20** as shown in FIG. **5(c),** or on the near side **20d** of the roundabout **20** as shown in FIG. **5(d),** the vehicle navigation apparatus informs the driver about the optimum traffic lane of the entry road **20d** to ensure that the automotive vehicle travels along the left side lane of the entry road **20d** and the inward turning lane of the roundabout **20.**

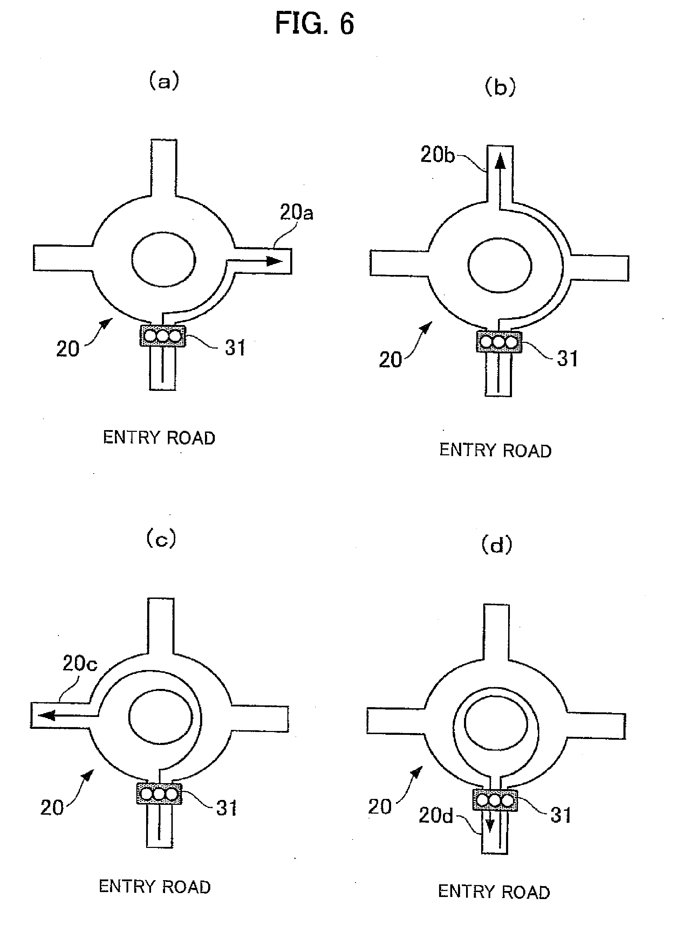

When the judgment is made that there is no traffic signal on the entry road 20d, the vehicle navigation apparatus does not inform the driver about the optimum traffic lane in accordance with the above-mentioned navigation method. When the judgments are made that there is a traffic signal **31** on the entry road **20d** as shown in FIG. **6,** and that the optimum outlet is on the right side **20a** of the roundabout **20** as shown in FIG. **6(a),** or on the far side **20b** of the roundabout **20** as shown in FIG. **6(b),** the vehicle navigation apparatus informs the driver about the optimum traffic lane of the roundabout **20** to ensure that the automotive vehicle travels along the outward turning lane of the roundabout **20.** When, on the other hand, the judgments are made that there is a traffic signal **31** on the entry road **20d** as shown in FIG. **6,** and that the optimum outlet is on the left side **20c** of the roundabout **20** as shown in FIG. **6(c),** or on the near side **20d** of the roundabout **20** as shown in FIG. **6(d),** the vehicle navigation apparatus informs the driver about the optimum traffic lane of the roundabout **20** to ensure that the automotive vehicle travels along the inward turning lane of the roundabout **20.**

From the above detailed description, it will be understood that the navigation system according to the embodiment of the present invention can allow the automotive vehicle to travel along an optimum traffic lane of the roundabout **20** in an efficient manner, by informing about the optimum traffic lane of the roundabout **20** and the optimum outlet of the roundabout **20** on the basis of the number of the traffic lanes of the roundabout **20.**

The navigation system according to the embodiment of the present invention can allow the automotive vehicle to travel along an optimum traffic lane of the roundabout 20 in a more efficient manner, by informing about the optimum traffic lane of the roundabout 20 on the basis of the number of the traffic lanes of the roundabout 20 and the number of the traffic lanes of the entry road **20d.**

The navigation system according to the embodiment of the present invention can allow the automotive vehicle to travel along an optimum traffic lane of the roundabout **20** in a more efficient manner, by informing about the optimum traffic lane of the roundabout **20** on the basis of the number of the traffic lanes of the roundabout **20,** the number of the traffic lanes of the entry road **20d,** and the judgment on whether or not there is a traffic **signal 31** on the entry road **20d.**

In this embodiment, the navigation system according to the present invention is adapted to inform about the roundabout to ensure that the automotive vehicle travels along the optimum traffic lane of the roundabout in a clockwise direction. However, the navigation system according to the present invention may be adapted to inform the driver about the roundabout to ensure that the automotive vehicle travels along an optimum traffic lane of a roundabout in a counterclockwise direction.

### INDUSTRIAL APPLICABILITY OF THE PRESENT INVENTION

As will be seen from the foregoing description, the navigation system according to the present invention has an effect of allowing an automotive vehicle to travel along an optimum traffic lane of a roundabout in an efficient manner, and inform about an optimum outlet of the roundabout on the basis of an optimum travel route to the destination. The navigation system according to the present invention are useful as a vehicle navigation apparatus mounted on the automotive vehicle, the navigation system having a special function for guiding the driver to an optimum outlet of a roundabout detected on a travel route to destination.

## Claims

1. A navigation system, comprising:
map information obtaining means for obtaining map information;
current position information obtaining means for obtaining information on a current position of a moving object;
optimum travel route calculating means for calculating an optimum travel route to a destination on the basis of said current position of said automotive vehicle;
direction judging means for judging whether or not there is a roundabout on the way to said destination on the basis of said optimum travel route, and detecting a direction of an optimum outlet of said roundabout when the judgment is made that there is a roundabout on the way to said destination;
number-of-traffic-lane-of-roundabout judging means for detecting the number of traffic lanes of said roundabout; and
informing means for informing about an optimum traffic lane to ensure that said moving object travels along said optimum traffic lane to said optimum outlet from an entry road of the roundabout.

2. A navigation system as set forth in claim 1, which further comprises number-of traffic-lane-of-entry-road judging means for detecting the number of traffic lanes of an entry road of said roundabout, and in which said informing means is adapted to inform about said optimum traffic lane on the basis of said number of said traffic lanes of said entry road.

3. A navigation system as set forth in claim 1 or claim 2, which further comprises traffic signal judging means for judging whether or not there is a traffic signal on said entry road to said roundabout, and in which said informing means is adapted to inform about said optimum traffic lane on the basis of the judgment made by said traffic signal detecting means.
